# EUROPÄISCHE PATENTANMELDUNG

(11) **EP 2 175 380 A1**
(43) Veröffentlichungstag der Anmeldung: **14.04.2010**
(21) Anmeldenummer: 08166142.3
(22) Anmeldetag: 08.10.2008
(51) Int. Cl.: G06F 17/30

(54) **Verfahren zur Wiederherstellung der Informationskette bei Datenbankinkonsistenzen**

(71) Anmelder: Lufthansa Cargo AG, Frankfurt/Main (DE)
(72) Erfinder: Jaeglé, Jonathan, 64342 Seeheim (DE)
(74) Vertreter: WSL Patentanwälte

(57) **Zusammenfassung**

Die vorliegende Erfindung betrifft ein Verfahren zur Korrelation von Datensätzen aus einer Mehrzahl von voneinander verschiedenen Datenbanksystemen. Um den Inhalt einer Mehrzahl von voneinander verschiedenen Datenbanksystemen zusammenzuführen ist ein Verfahren erforderlich, welches es ermöglicht die Daten auch bei Abweichungen einzelner, beispielsweise für ein bestimmtes Schadensereignis an einem Luftfahrzeug charakteristischer, Datenfelder miteinander zu kombinieren, wobei der Benutzer eine Qualitätsvorgabe für die zusammengeführte Information treffen kann. Erfindungsgemäß wird diese Aufgabe durch ein Verfahren zur Korrelation von Datensätzen (2, 102) aus einer Mehrzahl von voneinander verschiedenen Datenbanksystemen (1, 101) gelöst, mit den Schritten: Bilden der Differenz (Pi) zwischen einem Datenfeld (3, 4, 5, 6) eines Datensatzes (2) eines ersten Datenbanksystems (1) und einem Datenfeld (103, 104, 105, 106) eines Datensatzes (102) eines zweiten Datenbanksystems (101), Zuordnen eines Eindeutigkeitsparameters (Qi) zu der Differenz (Pi), Vergleichen des Eindeutigkeitsparameters (Qi) oder eines daraus abgeleiteten Werts (Q) mit einem vorgegebenen Schwellenwert (QS), Zuordnen des Datensatzes (2) des ersten Datenbanksystems (1) zu dem Datensatz (102) des zweiten Datenbanksystems (101), wenn der Eindeutigkeitsparameter (Qi) oder der daraus abgeleitete Wert (Q) über dem Schwellenwert (QS) liegt.

## Beschreibung

Die vorliegende Erfindung betrifft ein Verfahren zur Korrelation von Datensätzen aus einer Mehrzahl von voneinander verschiedenen Datenbanksystemen.

Um die hohen Sicherheitsstandards im internationalen Luftverkehr zu erfüllen, wird die Verwendung von Flugzeugteilen, insbesondere von solchen Teilen, welche einem Verschleiß im Betrieb unterliegen, protokolliert und der Zustand der Teile in Datenbanken erfaßt. Dabei werden an unterschiedlichen Stellen des Produktionsprozesses unterschiedliche Datensysteme verwendet, die zunächst keinerlei technische oder inhaltliche Verbindung zueinander aufweisen.

Beispielsweise wird im Flugbetrieb an einer Steuerungsplatine ein Fehler erfaßt. Dieser Fehler wird zusammen mit einer Identifizierung der entsprechenden Platine in eine Datenbank eingegeben, welche alle während des Flugbetriebs auftretenden Unregelmäßigkeiten erfaßt. Neben dem aufgetretenen Fehler werden beispielsweise der Flugzeugtyp und die Luftfahrzeugkennung, aber auch die sonstigen Betriebsparameter, wie zum Beispiel Temperatur, Flugdauer, etc., in die Datenbank eingepflegt. Wieder am Boden wird das entsprechende Teil ausgebaut und durch ein passendes Ersatzteil ersetzt. Beim Austausch des Teils wird der Ausbau ebenfalls in eine Datenbank protokolliert. Das fehlerhafte Teil wird dann in die Werkstatt gegeben, wo es einer sorgfältigen Fehleranalyse unterzogen wird und, so dies möglich ist, wieder instandgesetzt wird. In der Werkstatt werden die Informationen über den festgestellten Fehlerbefund zusammen mit einer eindeutigen Identifizierung des Bauteils erneut in ein drittes, von den ersten und zweiten Datenbanksystemen verschiedenes Datenbanksystem eingegeben. Nachfolgend wird in der Regel das instandgesetzte und überholte Teil, da es nicht sofort wieder zum Einsatz gelangt, gelagert. Auch bei der Lagerung wird das Teil mit einer eindeutigen Identifizierung und Angaben über seinen Zustand und seine Historie in ein weiteres, viertes Datenbanksystem eingepflegt. Die Anzahl von vier Datenbanksystemen ist lediglich beispielhaft und es ist denkbar, daß ganz unterschiedliche Anzahlen von unterschiedlichen, technisch und inhaltlich voneinander verschiedenen Datenbanksystemen zur Verwaltung und Überwachung einzelner Flugzeugteile zum Einsatz kommen.

Auch wenn die auf die beschriebene Art durchgeführte Dokumentation ausreichend ist, um alle Qualitäts- und Sicherheitsstandards zu erfüllen, so ist es nicht nur aus wirtschaftlicher, sondern vor allem aus technischer Sicht wünschenswert, die Informationen über ein bestimmtes Flugzeugteil, die an bestimmten Stellen des Produktionsprozesses gewonnen wurden, konsistent zusammenzuführen, um aus der Kombination dieser Informationen weitere Schlüsse ziehen zu können. Ferner sollen die gewonnenen Erkenntnisse dazu benutzt werden, aufkommenden Störungen vorzubeugen.

So treten bestimmte Fehlverhalten von bestimmten Bauteilen beispielsweise nur unter extremen Witterungsbedingungen auf, die sich beispielsweise dadurch ergeben, daß ein Flugzeug in tropischen Regionen über eine Zeitdauer von mehreren Stunden auf dem Flugvorfeld steht. Diese Information und insbesondere die Häufung des auftretenden Fehlers unter diesen extremen Bedingungen läßt sich jedoch nur erfassen, wenn die Informationen aller verwendeten Datenbanken zusammen betrachtet und ausgewertet werden können.

Bei diesem Zusammenführen der Datenbestände der einzelnen Datenbanken dürfen jedoch nur solche Daten miteinander verknüpft werden, die auch tatsächlich zusammengehören, d.h. das gleiche Bauteil bzw. den gleichen Fehler betreffen. Dabei muß ein hoher Grad an Zuverlässigkeit gewährleistet sein, da es sich insgesamt um sicherheitsrelevante Informationen handelt. Beispielsweise dürfen zwei Datensätze aus unterschiedlichen Datenbanksystemen, welche eindeutig das gleiche Teil beschreiben, nur dann kombiniert werden, wenn beide Datensätze eindeutig als zu dem gleichen Teil und zum gleichen Fehlereignis zugehörig identifiziert werden.

Bei Verfahren aus dem Stand der Technik bedeutet dies beispielsweise, daß zwei Datensätze bzw. die darin enthaltenen Informationen nur dann kombiniert werden dürfen, wenn die das betreffende Teil eindeutig identifizierende Seriennummer in beiden Datensätzen die gleiche ist oder beispielsweise der Typ des Teils, der Hersteller des Teils sowie das Herstellungsdatum in beiden Datensätzen vollständig übereinstimmen. Aufgrund dessen, daß die Datensätze der einzelnen Datenbanksysteme zu unterschiedlichen Zeitpunkten von unterschiedlichen Personen, zum Teil unter erheblichem Zeitdruck, eingepflegt wurden, lassen sich jedoch Eingabefehler, wie zum Beispiel orthographische Fehler oder Zahlendreher, nicht ausschließen. So führt beispielsweise ein Zahlendreher in einem Datensatz eines Datenbanksystems dazu, daß die Informationen zweier Datensätze nicht miteinander kombiniert werden, da keine Übereinstimmung in dem maßgeblichen Kriterium vorliegt.

Demgegenüber liegt der vorliegenden Erfindung die Aufgabe zugrunde, ein Verfahren bereitzustellen, daß die Korrelation voneinander verschiedener Datenbanksysteme mit einem gegenüber dem Stand der Technik erhöhten Informationsgewinn ermöglicht.

Diese Aufgabe wird erfindungsgemäß durch ein Verfahren zur Korrelation von Datensätzen aus einer Mehrzahl von voneinander verschiedenen Datenbanksystemen gelöst, welches die Schritte aufweist: Bilden der Differenz zwischen einem Datenfeld eines Datensatzes eines ersten Datenbanksystems und einem Datenfeld eines Datensatzes eines zweiten Datenbanksystems, Zuordnen eines Eindeutigkeitsparameters zu der Differenz, Vergleichen des Eindeutigkeitsparameters oder eines daraus abgeleiteten Werts mit einem vorgegebenen Schwellenwert, Zuordnen des Datensatzes des ersten Datenbanksystems zu dem Datensatz des zweiten Datenbanksystems, wenn der Eindeutigkeitsparameter oder der daraus abgeleitete Wert über dem Schwellenwert liegt.

Das erfindungsgemäße Verfahren ist insbesondere zur Verwendung mit mehr als zwei Datenbanksystemen geeignet.

Ein derartiges Verfahren ermöglicht es, zwei Datensätze, welche zu dem gleichen Teil gehören, auch dann zusammenzuführen und aus dieser Zusammenführung eine Mehrinformation zu gewinnen, wenn eines oder mehrere zu vergleichende Datenfelder nicht vollständig, d.h. zu weniger als 100%, übereinstimmen.

Ferner ermöglicht das Verfahren unter Berücksichtigung einer Qualitätsvorgabe einen höchstmöglichen Informationsgehalt aus einem bestehenden Datenbestand zu extrahieren.

Weiterhin kann durch Ausdehnung des Verfahrens auf beliebig viele miteinander logisch verknüpfte Datenbanksysteme eine vollständige Informationskette zwecks technischer Ursachenerkennung und technischer Vorfallvermeidung wiederhergestellt werden.

Dabei wird unter einer Differenzbildung zwischen zwei Datenfeldern von Datensätzen unterschiedlicher Datenbanksysteme im Sinne der vorliegenden Erfindung ein Vergleich des Inhalts der zu vergleichenden Datenfelder verstanden. Handelt es sich bei dem Inhalt der Datenfelder um eine Zahl, so kann beispielsweise die Differenzbildung durch Bilden der mathematischen Differenz zwischen den beiden Zahlen der Felder der beiden zu vergleichenden Datensätze erfolgen. Ist die Differenz null, so sind die beiden Inhalte der Datenfelder identisch. Alternativ kommen für Zahlen auch Vergleiche im Sinne mathematischer Relationen, wie z.B. die Differenz der Datenfelder ist kleiner als 0,01, in Betracht.

Handelt es sich bei dem Inhalt der Datenfelder beispielsweise um einen Datenstring, so können bei der Differenzbildung im Sinne der vorliegenden Erfindung die Unterschiede zwischen den beiden zu vergleichenden Strings identifiziert werden. Handelt es sich bei der Abweichung beispielsweise um eine Abweichung an einer einzigen Stelle des Datenworts des Strings in der Mitte des Stings, so liegt mit hoher Wahrscheinlichkeit ein Tippfehler bei der Information in das entsprechende Datenfeld vor.

Enthalten die zu vergleichenden Datenfelder beispielsweise numerische Datumsangaben der Form "12.01.2008" in dem ersten zu vergleichenden Datenfeld und "21.01.2008" in dem zweiten zu vergleichenden Datenfeld, so ermöglicht es die Differenzbildung, nicht nur festzustellen, daß es eine Abweichung in der Tagesangabe des Datums gibt, sondern auch zu identifizieren, daß offenbar die Ziffern, welche den Tag angeben, vertauscht wurden, d.h. ein Zahlendreher vorliegt.

Über die mathematische Definition der Differenz hinaus bedeutet die Differenzbildung im Sinne der vorliegenden Anmeldung daher im erweiterten Sinne einen Vergleich zwischen zwei Datenfeldern.

Beim Zuordnen eines Eindeutigkeitsparameters zu der Differenz wird die Differenz selbst und vorzugsweise die Art der Abweichung bewertet. Tritt keine Differenz zwischen den Inhalten der zu vergleichenden Datenfelder auf, so beträgt der Eindeutigkeitsparameter 1,0, wobei der Wert von 1,0 hier willkürlich gewählt ist und jeder andere Zahlenbereich herangezogen werden könnte, um den Eindeutigkeitsparameter zu beschreiben, solange definiert wird, welcher Wert eine 100%-ige Übereinstimmung und welcher andere Wert keine Übereinstimmung repräsentiert. In dem gegebenen Beispiel, bei welchem der Wert 1,0 eine vollständige Übereinstimmung bezeichnet, bezeichnet ein Wert von null für den Eindeutigkeitsparameter keinerlei Übereinstimmung zwischen den Inhalten der zu vergleichenden Datenfelder.

Der Eindeutigkeitsparameter stellt in diesem Sinne ein Maß für die Abweichungen zwischen den Inhalten der zu vergleichenden Datenfelder dar. Dabei kann in die Zuordnung des Eindeutigkeitsparameters nicht nur das Vorliegen einer Abweichung zwischen den beiden Inhalten der Datenfelder einfließen, sonder auch welcher Art bzw. welchen Typs diese Abweichung ist. So könnte beispielsweise ein einfacher Zahlendreher in einer zehnstelligen Zahl mit einem höheren Eindeutigkeitsparameter versehen werden als eine deutliche Abweichung in zwei oder drei Stellen der zu betrachtenden Zahlen.

In einer Ausführungsform erfolgt die Zuordnung des Eindeutigkeitsparameters, indem vorab Eindeutigkeitsparameter für bestimmte Abweichungen zwischen den zu vergleichenden Datenfeldern definiert und beispielsweise in einer Nachschlagetabelle gespeichert werden. Die beim Vergleich der Datenfelder aufgefundene Differenz wird dann mit der Nachschlagetabelle abgeglichen und der zugehörige Eindeutigkeitsparameter der Differenz zugeordnet.

In einem nächsten Schritt wird der Eindeutigkeitsparameter oder ein daraus abgeleiteter Wert mit einem vorgegebenen Schwellenwert verglichen. Dabei ist der Schwellenwert von dem Benutzer des Systems einstellbar und je nach Anforderung frei wählbar. Müssen für eine bestimmte zu gewinnende Information jegliche Zweifel ausgeschlossen werden, so kann der Schwellenwert beispielsweise auf eins gesetzt werden, d.h. nur solche Datensätze werden zusammengeführt, deren das entsprechende Flugzeugteil eindeutig identifizierende Datenfelder eine vollständige Übereinstimmung aufweisen. Um mehr Information auch bei Abweichungen in den das entsprechende Flugzeugteil identifizierenden Datenfeldern gewinnen zu können, kann der Schwellenwert gesenkt werden.

In einer Ausführungsform ist es zweckmäßig, die Differenz mindestens zwischen einem ersten Datenfeld eines ersten Datensatzes des ersten Datenbanksystems und einem ersten Datenfeld eines Datensatzes des zweiten Datenbanksystems und zusätzlich zwischen einem zweiten Datenfeld eines Datensatzes des ersten Datenbanksystems und einem zweiten Datenfeld eines Datensatzes des zweiten Datenbanksystems zu bilden und diesen Differenzen jeweils einen Eindeutigkeitsparameter zuzuordnen. Dieses Vorgehen ist insbesondere dann von Vorteil, wenn das Flugzeugteil anhand der Kombination einer Mehrzahl von Datenfeldern des Datensatzes, zum Beispiel Herstellungsdatum, Hersteller und Typ des Teils, eindeutig identifizierbar ist.

Für die zuvor genannte Ausführungsform der Erfindung gibt es eine Mehrzahl von Möglichkeiten, die Eindeutigkeitsparameter, die jeder der Differenzen zugeordnet sind, mit dem Schwellenwert zu vergleichen und so eine Entscheidung zu treffen, ob die Datensätze der unterschiedlichen Datenbanksysteme zusammengeführt werden sollen oder nicht.

In einer Ausführungsform wird der arithmetische Mittelwert der Mehrzahl von Eindeutigkeitsparametern gebildet und dieser Mittelwert mit dem Schwellenwert verglichen.

In einer alternativen Ausführungsform wird vorab jeder möglichen Kombination von Abweichungen der Mehrzahl von Paaren von Datenfeldern ein einziger Eindeutigkeitsparameter zugeordnet. Dieser vorbestimmte Eindeutigkeitsparameter wird dann bei der Korrelation von konkreten Datensätzen einer tatsächlich auftretenden Kombination von Abweichungen zugeordnet und quantifiziert die tatsächlich auftretenden Differenzen.

Dabei ist die erfindungsgemäße Differenzbildung nicht auf zwei Paare von Datenfeldern beschränkt, sondern es kann eine Mehrzahl, d.h. eine beliebige Anzahl, von solchen Paaren von Datenfeldern herangezogen werden, um die beispielsweise zu einem Fehlerereignis oder einem Flugzeugteil gehörigen Datensätze zu identifizieren.

In einer alternativen Ausführungsform ist es möglich, die einzelnen Eindeutigkeitsparameter mit Wichtungen zu versehen, welche die Kennzeichnungskraft der einzelnen Datenfelder für das entsprechende Flugzeugteil wiederspiegeln. Beispielsweise kann der Eindeutigkeitsparameter eine ein Flugzeugteil unter normalen Umständen eindeutig identifizierende Codenummer mit einer hohen Wichtung versehen werden, da, falls eine hochgradige Übereinstimmung in dieser Nummer zwischen den einzelnen Datensätzen vorliegt, eine hohe Wahrscheinlichkeit dafür gegeben ist, daß die beiden Datensätze tatsächlich das gleiche Teil beschreiben. In diesem Fall ist der Eindeutigkeitsparameter, der alle Abweichungen erfasst, der gewichtete Mittelwert aller Eindeutigkeitsparameter für die einzelnen Paare von Datenfeldern.

Das erfindungsgemäße Verfahren eignet sich insbesondere zur Korrelation von Datensätzen aus einer Mehrzahl von voneinander verschiedenen Datenbanksystemen, welche Flugzeugteile und deren technische Zustände während des Flugbetriebs, bei der Wartung, in der Werkstatt und sonstigen Stationen des Produktionsbetriebs beschreiben.

Insoweit die oben beschriebenen Ausführungsformen zumindest teilweise realisiert werden können, wobei eine softwaregesteuerte Verarbeitungseinrichtung verwendet wird, ist es offensichtlich, daß ein Computerprogramm, das solch eine Softwaresteuerung bereitstellt und ein Speichermedium, auf welchem solch ein Computerprogramm gespeichert ist, als Aspekte der Erfindung in Betracht zu ziehen sind.

Werden in einer Ausführungsform des erfindungsgemäßen Verfahrens mehr als zwei voneinander verschiedenen Datenbanksysteme zur Informationsgewinnung miteinander korreliert, so müssen nicht für alle Datenbanksysteme die gleichen Paare von Datenfeldern miteinander verglichen werden, sondern für ein erstes Paar von Datenbanksystemen kann ein erstes Paar von Datenfeldern für die Differenzbildung herangezogen werden, während für ein zweites Paar von Datenbanksystemen ein zweites Paar von Datenfeldern, welches von dem ersten Paar von Datenfeldern verschieden ist, herangezogen wird. In einer solchen Ausführungsform weist das erfindungsgemäße Verfahren vorzugsweise zur Korrelation von Datensätzen von mindestens drei Datenbanksystemen die Schritte auf: Bilden der Differenz zwischen einem ersten Datenfeld eines Datensatzes eines ersten Datenbanksystems und einem ersten Datenfeld eines Datensatzes eines zweiten Datenbanksystems sowie zwischen einem zweiten Datenfeld des Datensatzes des zweiten Datenbanksystems und einem ersten Datenfeld eines Datensatzes eines dritten Datenbanksystems, Zuordnen je eines Eindeutigkeitsparameters zu jeder der Differenzen, Vergleichen eines aus den Eindeutigkeitsparametern abgeleiteten Werts mit einem vorgegebenen Schwellenwert, Zuordnen des Datensatzes des ersten Datenbanksystems zu dem Datensatz des zweiten Datenbanksystems und zu dem Datensatz des dritten Datenbanksystems, wenn der aus den Eindeutigkeitsparametern abgeleitete Wert über einem Schwellenwert liegt.

Werden beispielsweise drei Datenbanksysteme A, B und C zur Informationsgewinnung miteinander korreliert, so kann für eine Korrelation der Systeme A und B ein Paar von Datenfeldern herangezogen werden, wobei jedes der Datenfelder den Flug identifiziert, auf welchem ein Fehlerereignis aufgetreten ist. Wenn beispielsweise aber das Datenbanksystem C ein solches Datenfeld überhaupt nicht aufweist, so kann eine Korerelation der Datenbanksysteme A und C bzw. B und C mit Hilfe eines weiteren Datenfeldes erfolgen, welches das Flugzeugteil selbst identifiziert.

Bei einer solchen Ausführungsform des erfindungsgemäßen Verfahrens kann der übergeordnete Eindeutigkeitsparameter für die Korrelation aller Datenbanksysteme als Produkt des Eindeutigkeitsparameters Q_{AB} für die Differenz eines Paares von Datenfeldern oder einer Mehrzahl von Paaren von Datenfeldern eines ersten und eines zweiten Datenbanksystems und des Eindeutigkeitsparameters Q_{BC} für die Differenz eines Paares von Datenfeldern oder einer Mehrzahl von Paaren von Datenfeldern des zweiten und eines dritten Datenbanksystems gebildet werden. D.h. in dem obigen Beispiel Q= Q_{AB} ^{*} Q_{BC}.
Weitere Vorteile, Merkmale und Anwendungsmöglichkeiten der vorliegenden Erfindung werden anhand der folgenden Beschreibung einer Ausführungsform und der dazugehörenden Figuren deutlich.
- Figur 1: zeigt eine schematische Darstellung zweier Datenbanksysteme.
- Figur 2: zeigt eine schematische Darstellung zweier Datensätze der Datenbanksysteme aus Figur 1.
- Figur 3: zeigt schematisch die Korrelation dreier unterschiedlicher Datenbanksysteme.

Im Flugbetrieb und bei der Flugzeugwartung ist es von großer Bedeutung, technisch bedingte Störungen frühzeitig zu identifizieren und zu beseitigen. Dies ist essentiell für einen ökonomischen und sicheren Betrieb. Die aus der laufenden Wartung von Flugzeugen und deren Teilen gewonnenen Erkenntnisse sollen zum einen dazu benutzt werden, konkret auftretende Störungen beseitigen zu können, zum anderen sollen aus der Gesamtheit der registrierten und gespeicherten Vorkommnisse Schlüsse gezogen werden, welche zukünftigen Störungen vorbeugen. Zu diesem Zweck ist eine zusammenhängende Informationskette, welche den Zustand der einzelnen Flugzeugteile im Betrieb beschreibt, erforderlich. Erst die vollständige Information ermöglicht es, fehlerhafte Teile vom Flugzeug so schnell wie möglich zu entfernen und insgesamt den Wechsel von Teilen zu minimieren.

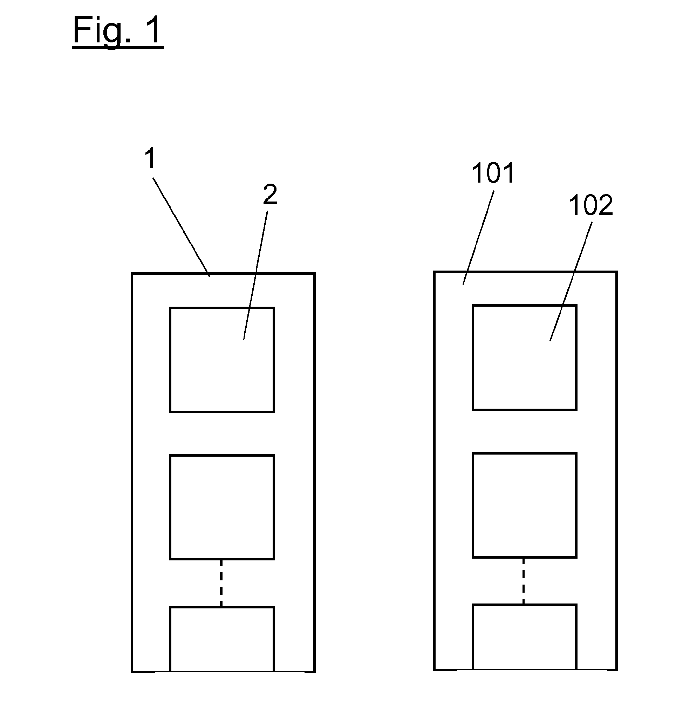

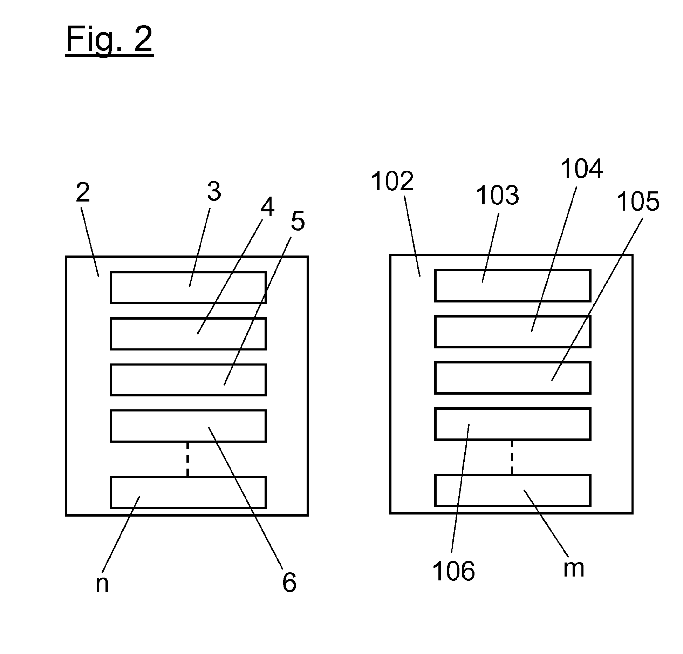

Im folgenden wird anhand der Figuren 1 und 2 eine Ausführungsform des erfindungsgemäßen Verfahrens beschrieben, wobei beispielhaft eine Situation beschrieben wird, in der die Daten für Flugzeugteile in zwei Datenbanken 1, 101 (s. Figur 1) vorgesehen sind. Dabei dient die erste Datenbank 1 dem Abspeichern des Befunds eines Flugzeugteils beim Ausbau des Teils aus dem Flugzeug. Für jedes Ausbauereignis wird in der Datenbank 1 je ein Datensatz 2 mit einer Anzahl von einzelnen Datenfeldern 3, 4, 5, 6..,n angelegt. Beispielsweise enthält jeder Datensatz 2 Felder 3, 4, 5, 6, welche den Tag des Ausbaus des Teils, die Luftfahrzeugkennung (Tailsign) des Flugzeugs, in welches das Teil verbaut war, die Teilenummer und die Seriennummer des Teils beschreiben. Weitere Datenfelder identifizieren dann beispielsweise das Fehlerereignis, den Ort des Auftretens des Fehlers oder Umgebungsparameter wie Temperatur und Luftfeuchtigkeit.

Die zweite Datenbank 101 umfaßt ebenfalls eine Mehrzahl von Datensätzen 102, welche die Befunde aus der Werkstatt für jeweils einen Schadensfall eines Flugzeugteils beschreiben. Wie in Figur 2 dargestellt, weist auch jeder der Datensätze 102 der zweiten Datenbank 101 eine Mehrzahl von Datenfeldern 103, 104, 105, 106, ..., m auf. Für jedes Reparaturereignis wird in der Datenbank 101 ein Datensatz 102 mit einer großen Anzahl von Datenfeldern 103 bis m angelegt, wobei im vorliegenden Beispiel jeder Datensatz 102 Datenfelder 103, 104 enthält, welche wie zuvor den Tag des Ausbaus des Teils, die Luftfahrzeugkennung des entsprechenden Flugzeugs, in welches das Teil verbaut war, die Teilenummer und die Seriennummer des Teils beschreiben. In den weiteren Datenfeldern werden beispielsweise die Art des Fehlerereignisses, die erforderliche Reparatur, Hinweise auf die Fehlerursache etc. beschrieben. Dabei muss insbesondere die Anzahl m der Datenfelder, welche in dem Datensatz 102 der zweiten Datenbank 101 enthalten sind, nicht notwendigerweise mit der Anzahl n der Datenfelder des Datensatzes 2 der Datenbank 1 übereinstimmen.

Sollen nun die in der ersten Datenbank 1 und der zweiten Datenbank 101 enthaltenen Daten zusammengeführt werden, um aus dieser Zusammenführung eine Mehrinformation zu erhalten, so müssen die einzelnen Datenfelder der Datensätze 2, 102 der beiden Datenbanken 1, 101 miteinander korreliert werden, um festzustellen, ob je zwei Datenfelder 2, 102 zum gleichen Fehler- bzw. Schadensereignis gehören. Insbesondere gilt es zu vermeiden, daß Informationen, welche unterschiedliche Schadensereignisse für voneinander verschiedene Flugzeugteile betreffen, miteinander kombiniert werden, wodurch falsche Informationen generiert würden, die möglicherweise sicherheitsrelevante Folgen hätten.

Ein denkbares Szenario, welches im folgenden beispielhaft beschrieben wird, ist, daß der Verdacht besteht, daß bestimmte technische Ausfälle eines Teils immer dann auftreten, wenn das Teil erhöhten Temperaturen ausgesetzt war, wie sie beispielsweise auf den Vorfeldern von Flughäfen in den Tropen und Subtropen auftreten.

Um die Datensätze korrelieren zu können wird zunächst eine Mehrzahl von Datenfeldern bestimmt, welche in jedem der zu korrelierenden Datensätze 2, 102 enthalten sind und welche einen Schadensfall für ein bestimmtes Flugzeugteil eindeutig identifizieren. Eine solche Kombination von Datenfeldern ist die Kombination "Tag des Ausbaus", "Luftfahrzeugkennung", "Teilenummer" und "Seriennummer".

Für jedes der vier Paare wird zunächst die Differenz zwischen den entsprechenden Datenfeldern der beiden Datenbanken 1, 101 gebildet:
**P1 = {3-103},**
**P2 = {4-104},**
**P3 = {5-105} und**
**P4 = {6-106}.**
Im folgenden Schritt wird zu jeder Differenz Pi ein Eindeutigkeitsparameter Qi zugeordnet, wobei die Zuordnung mit Hilfe eines für jedes Datenfeld vorgegebenen Schemas erfolgt. Diese vorgegebenen, d.h. bereits abgespeicherten Möglichkeiten für die Eindeutigkeitsparameter Qi werden im folgenden für die vier in diesem Beispiel diskutierten Datenfelder aufgelistet:
**1. Mögliche Eindeutigkeitsparameter Q1 für das Ausbaudatum**
   wenn P1 = 0 (vollständige Übereinstimmung der Ausbaudaten der Felder 3, 103), dann Q1 = 1,00
   wenn P1 = +/- 1 Tag (Abweichung im Ausbaudatum von einem Tag), dann Q1 = 0,80
   wenn P1 = +/- 3 Tage (Abweichung im Ausbautag von +/- drei Tagen), dann Q1 = 0,60
   wenn P1 = +/- 5 Tage (Abweichung im Ausbautag von +/- fünf Tagen), dann Q1 = 0,20
   wenn eines der Datenfelder keine Daten enthält, dann Q1 = 0,00
   Der Eindeutigkeitsparameter Q1 sinkt mit zunehmender Abweichung der beiden Daten voneinander, da die Möglichkeit der Verwechselung steigt.
**2. Mögliche Eindeutigkeitsparameter Q2 für die Luftfahrzeugerkennung**
   wenn P2 = 0 (vollständige Übereinstimmung der Luftfahrzeugerkennung der beiden zu korrelierenden Datensätze), dann Q2 = 1,00,
      z. B. P2 = {"D-ALCA"-"D-ALCA"}, dann Q2=1,00
   wenn P2 eine Abweichung in der letzten Ziffer der zu vergleichenden Luftfahrzeugkennungen aufweist, dann Q2 = 0,60,
      z. B. P2 = {"D-ALC"-"D-ALCA"}, dann Q2 = 0,60
   wenn eine der zu vergleichenden Luftfahrzeugkennungen den Eigner des Flugzeugs nicht explizit umfaßt, dann Q2 = 0,40,
      z. B. P2 = {"D-A"-"D-ALCA"}, dann Q2 = 0,40
   wenn ein Datenfeld keine Daten enthält, dann Q2 = 0,00,
      z. B. P2 = {NO DATA-"D-ALCA"}, dann Q2 = 0,00
**3. Mögliche Eindeutigkeitsparameter Q3 für die Teilenummer**
   wenn die Teilenummern vollständig übereinstimmen, dann Q3 = 1,00,
      z. B. P3 = {"066-50000-2220"- "066-50000-2220"}, dann Q3 = 1,00
   wenn ein typographischer Fehler die Abweichung der Seriennummer des Teils hervorgerufen hat, dann Q3 = 0,90,
      z. B. P3 = {"066500002220"-"066-500000-2220"}, dann Q3 = 0,90
   wenn die Teilenummer in einer anderen Codierung vorliegt, jedoch das gleiche Teil bezeichnet, dann Q3 = 0,60,
      z. B. P3 = {"ATA344601 TCAS COMPUTER"-"066-50000-2220"}, dann Q3 = 0,60
   wenn die Teilenummer über das Aircraft-Subsystem (ATA4) erkennbar ist, dann Q3 = 0,40,
      z. B. P3 = {"ATA3446 TCAS SYSTEM"-066-50000-2220"}, dann Q3 = 0,40
   wenn ein Datenfeld keine Daten enthält, dann Q3 = 0,00,
      z. B. P3 = {NO DATA-"066-50000-2220"}, dann Q3 = 0,00
**4. Mögliche Eindeutigkeitsparameter Q4 für die Seriennummer des Teils**
   In dem vorliegenden Beispiel werden für die Seriennummer des Teils keine Abweichungen definiert:
   wenn die Seriennummern vollständig übereinstimmen, dann Q4 = 1,00,
      z. B. P4 = {"4711"-"4711"}, dann Q4 = 1,00
   wenn ein Feld eine falsche Information enthält, dann Q4 = 0,00,
      z. B. P4 = {"4811"-"4711"}, dann Q4 = 0,00

Um einen Eindeutigkeitsparameter Q zu bilden, der die Kombination der miteinander verglichenen Datenfelder abbildet, wird Q als der Mittelwert der einzelnen für jedes zu vergleichende Datenfeld bestimmten Eindeutigkeitsparameter Qi definiert, d.h. Q = Mittelwert (Qi). Im zuvor beschriebenen Beispiel ergeben sich 200 mögliche Kombinationen für die Eindeutigkeitsparameter der vier Datenfeldpaare. Liegt der Schwellenwert QS für den Eindeutigkeitsparameter bei 80 %, d.h. es sollen alle Ergebnisse als vertrauenswürdig betrachtet werden, für die der Eindeutigkeitsparameter Q 0,8 und mehr beträgt, so gibt es immerhin 21 Kombinationen von Eindeutigkeitsparametern Qi der einzelnen zu vergleichenden Datenfeldpaare, die es dem System immer noch ermöglichen, die entsprechenden Datensätze zusammenzuführen und so eine Mehrinformation zu generieren.

Im Folgenden wird ein Beispiel betrachtet, in dem der Datensatz 2 der ersten Datenbank 1 die folgenden Inhalte für die vier zu betrachtenden Datenfelder 3, 4, 5, 6 enthält:
Tag des Ausbaus: 01. 08. 2008
Luftfahrzeugkennung: D-ALC
Teilenummer: 066-50000-2220
Seriennummer: 4711

Demgegenüber enthält der zu vergleichende Datensatz 102 des zweiten Datenbanksystems 101 in den Datenfeldern 103 bis 106 die folgenden Daten:
Tag des Ausbaus: 02.08.2008
Luftfahrzeugkennung: D-ALCA
Teilenummer: 066-50000-2220
Seriennummer: 4711

Aus den zuvor angegebenen gespeicherten Werten für die Eindeutigkeitsparameter wird mit jeder Differenz Pi der entsprechende Eindeutigkeitsparameter Qi zugewiesen: Für P1 ist Q1 = 0,8, für P2 ist Q2 = 0,6, für P3 ist Q3 = 1 und für P4 ist Q4 = 1. Daraus ergibt sich ein Mittelwert für den Eindeutigkeitsparameter Q von 0,85. Dieser liegt über der vorgegebenen Schwelle von 80 %, so daß beim Zusammenfügen der Daten aus den beiden hier abzugleichenden Datensätzen eine zuverlässige Information über einen einzigen Schadensfall eines einzigen Teils gewonnen werden kann.

Verglichen mit den Systemen aus dem Stand der Technik, bei welchen bereits eine fehlende eindeutige Übereinstimmung für ein einziges Datenfeldpaar zu einem Abfallen des Eindeutigkeitsparameters Q auf 75 % führt, führt das erfindungsgemäße Verfahren zu einer wesentlich größeren Datenmenge, die dann zur Auswertung von Fehlern und deren vorbeugender Behandlung bereitsteht.

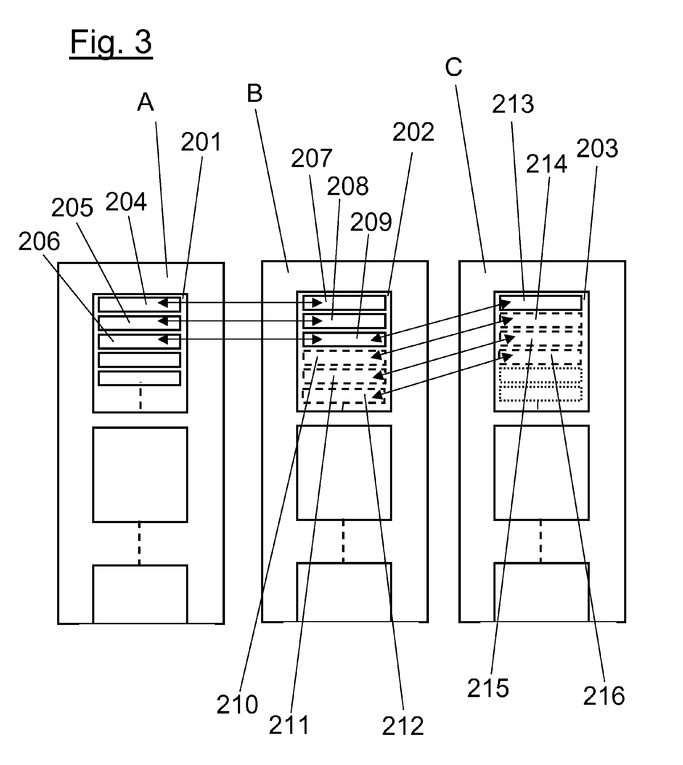

In Figur 3 ist eine alternative Ausführungsform des erfindungsgemäßen Verfahrens dargestellt, bei welchem die Information dreier voneinander verschiedener Datenbanksysteme A, B und C zu korrelieren und deren Information zu aggregieren ist.

Während das erste Datenbanksystem A in seinen Datensätzen Informationen über die während den einzelnen Flügen aufgetretenen Fehlern enthält, umfaßt das Datenbanksystem B Informationen über ausgebaute Flugzeugteile, die als mögliche Fehlerquellen gelten und das Datenbanksystem C enthält in seinen Datensätzen die in der Werkstatt für die einzelnen Teile bzw. Fehlerereignisse analysierten Befunde.

Zu jedem in einem Flugzeug während des Flugs aufgetretenen Fehlerereignis gibt es bei vorschriftsgemäßer Pflege der einzelnen Datenbanksysteme A, B und C jeweils einen Datensatz 201, 202, 203. Der Datensatz 201 enthält die Information über den tatsächlich während des Fluges am Flugzeug aufgetretenen Fehler, der Datensatz 202 des zweiten Datenbanksystems B enthält die Informationen über das ausgebaute Flugzeugteil, welches zunächst als Ursache für den aufgetretenen Fehler angesehen wurde und der Datensatz 203 des Datenbanksystems C enthält die Informationen über die Befunde der Werkstatt für das ausgebaute Teil.

In dem in Figur 3 gezeigten Beispiel weist der erste Datensatz 201 des Datenbanksystems A drei Datenfelder auf, welche zusammen das Fehlerereignis am Flugzeug eindeutig identifizieren: den Tag des Abflugs in Datenfeld 204 des Datensatzes 201, die Luftfahrzeugkennung des entsprechenden Flugzeugs in Datenfeld 206 des Datensatzes 201 und das Aircraft System (ATA) in Datenfeld 205 des Datensatzes 201.

Die gleichen Informationen finden sich auch in dem Datensatz 202 des Datenbanksystems B, welcher das nach dem Auftreten des Fehlers am Flugzeug ausgebaute Flugzeugteil beschreibt. In dem Datensatz 202 sind diese drei Informationen in den Datenfeldern 207 (Tag des Abflugs), 209 (Luftfahrzeugkennung) sowie 208 (Aircraft System) enthalten.

Das Datensatz 202 des Datenbanksystems B enthält darüber hinaus noch Angaben, welche das ausgebaute Teil eindeutig identifizieren. In dem dargestellten Beispiel sind dies das Ausbaudatum in Datenfeld in Datenfeld 210, die Teilenummer in Datenfeld 211 sowie die Seriennummer des Teils in Datenfeld 212.

Im Gegensatz zum Datenbanksystem B enthalten die Datensätze des Datenbanksystems C keine eindeutigen Angaben über das Abflugdatum des Flugs, auf welchem der Fehler auftrat, und das Aircraft System. Dafür ist jedoch auch in dem Datenbanksystem C das entsprechende ausgebaute Teil im Datensatz 203 anhand der Luftfahrzeugkennung (Datenfeld 213), des Ausbaudatums (Datenfeld 214), der Teilenummer (Datenfeld 215) und der Seriennummer (Datenfeld 216) eindeutig identifizierbar.

Darüber hinaus enthält jeder der drei Datensätze 201, 202, 203, welche zu dem gleichen Fehlerereignis gehören, weitere individuelle Datenfelder, mit einer für den jeweiligen Datensatz individuellen Beschreibung des aufgetretenen Fehlers, des analysierten Befundes sowie des ausgebauten Teils.

Um nun die in diesen drei Datenfeldern 201 bis 203 der Datenbanksysteme A, B und C enthaltenen Informationen verlässlich zusammenzuführen, wird in einem ersten Schritt paarweise die Differenzbildung zwischen den Datenfeldern 204 bis 206 und 207 bis 209 durchgeführt, um zu bestimmen, mit welcher Verläßlichkeit es sich bei den in den Datensätzen 201 und 202 enthaltenen Angaben um Angaben handelt, welche zu dem gleichen Fehlerereignis gehören.

In dem dargestellten Ausführungsbeispiel läßt sich anhand der drei Informationen Abflugdatum, Luftfahrzeugkennung und Aircraft System (ATA) der entsprechende Flug, auf welchem der Fehler aufgetreten ist und damit das Schadensereignis eindeutig identifizieren. Um trotz Fehlern, die sich aus der Datenpflege der einzelnen Datensätze 201, 202 ergeben, Informationen auch dann noch verläßlich zusammenführen zu können, wenn Abweichungen in einem oder mehreren der Datenfelder vorliegen, werden die Abweichungen oder Differenzen zwischen den einzelnen Datenfeldern, wie oben mit Eindeutigkeitsparametern beschrieben, die aus einer zuvor abgelegten, vorbestimmten Tabelle entnommen werden.

In der dargestellten Ausführungsform haben die vorbestimmten Eindeutigkeitsparameter die in der folgenden Tabelle gegebenen Zuordnungen:

| Abflugdatum (P1_{A-B},Q1_{A-B}) | Luftfahrzeugkennung (P2_{A-B},Q2_{A-B}) | Aircraft System (ATA (P3_{A-B},Q3_{A-B}) |
|---|---|---|
| P10_{A-B}= {Abflugdatum - Abflugdatum} | P20_{A-B}= {"D-ALCA" - "D-ALCA"} | P30_{A-B}) = {"ATA3446" - "ATA3446} |
| Q10_{A-B} = 1,00 | Q20_{A-B =} 1,00 | Q30_{A-B} = 1,00 |
| P11_{A-B} {Abflugdatum + 1/-1 Tag - Abflugdatum} | P21_{A-B}= {"D-ALC.." - "D-ALCA"} | P31_{A-B} = {"ATA34XX" - "ATA3446} |
| Q11_{A-B}=0,80 | Q21_{A-B}=0,70 | Q31_{A-B}=0,80 |
| P12_{A-B} = {Abflugdatum + 3/-3 Tag - Abflugdatum} | P22_{A-B}= {No Data - "D-ALCA"} | P32_{A-B} = {No Data - "ATA3446} |
| Q12_{A-B} = 0,60 | Q22_{A-B} = 0,00 | Q32_{A-B} = 0,00 |
| P13_{A-B} = {Keine Daten - Abflugdatum} | | |
| Q13_{A-B} = 0,00 | | |

Dem gegenüber läßt sich für die Datensätze 202 und 203 der Datenbanksysteme B bzw. C anhand einer Kombination von Ausbaudatum, Luftfahrzeugkennung, Teilenummer und Seriennummer das Fehlerereignis eindeutig identifizieren. Diese Information ist in den Datenfeldern 209, 210, 211 und 212 des Datensatzes 202 sowie in den Datenfeldern 213, 214, 215 und 216 des Datensatzes 203 enthalten. Um einzelne Abweichungen der Informationen in den einzelnen Paaren von zugehörigen Datenfeldern qualifizieren zu können, gibt es auch für diese Paare von Datenfeldern eine vorbestimmte Tabelle von Eindeutigkeitsparametern:

| Ausbaudatum {P1_{B-C},Q_{B-C}) | Luftfahrzeugkennung (P2_{B-C},Q2_{B-C}) | Teilenummer (P3_{B-C},Q3_{B-C}) | Seriennummer (P4_{B-C},Q4_{B-C}) |
|---|---|---|---|
| P10_{B-C} = {Ausbaudatum - Aus-baudatum} | P20_{B-C}= {"D-ALCA" - "D-ALCA"} | P30_{B-C}= {"066-50000-2220" - "066-50000-220"} | P40_{B-C} = {"4711" - "4711"} |
| Q10_{B-C} = 1,00 | Q20_{B-C} =1,00 | Q30_{B-C} = 1,00 | Q40_{B-C} = 1,00 |
| P11_{B-C} = {Ausbaudatum + 1/-1 Tag - Ausbaudatum} | P21_{B-C} = {"D-ALC.." - "D-ALCA"} | P31_{B-C} = {"066500002220" - "066-50000-2220"} | P41_{B-C} = {Keine Daten - "4711" } |
| Q11_{B-C} = 0,80 | Q21_{B-C} = 0,60 | Q31_{B-C} = 0,90 | Q41_{B-C} = 0,00 |
| P12_{B-C}= {Ausbaudatum + 3/-3 Tage - Ausbaudatum} | P22_{B-C}= {"D-ALC.." - "D-ALCA"} | P32_{B-C}= {"ATA344601 TCAS COMPUTER" - "066-50000-2220"} | |
| Q12_{B-C} = 0,60 | Q22_{B-C} = 0,40 | Q32_{B}-_{C} = 0,60 | |
| P13_{B-C} = {Ausbaudatum +5/-5 Tage - Ausbaudatum} | P23_{B-C} = {Keine Daten - "D-ALCA"} | P33_{B-C} = {"ATA3446 TCAS System" - "066-50000-2220} | |
| Q13_{B-C} 0,20 | Q23_{BC} = 0,00 | Q33_{B-C} = 0,40 | |
| P14_{B-C} = {Keine Daten - Ausbaudatum} | | P34_{B-C} = {Keine Daten - "066-50000-2220"} | |
| Q14_{B-C} = 0,00 | | Q34_{B-C} = 0,00 | |

Beim Korrelieren der drei Datenbanksysteme A, B und C werden zunächst die Datenfelder 204 bis 206 sowie 207 bis 209 der Datensätze 201 und 202 durch Differenzbildung miteinander verglichen, diesen Differenzen bzw. Abweichungen je ein Eindeutigkeitsparameter aus der ersten oben angegebenen Tabelle zugeordnet und dann durch Mittelwertbildung der drei Eindeutigkeitsparameter ein Eindeutigkeitsparameter Q_{AB} für die Zusammenführung der Information aus den Datenfeldern 201 und 202 der Datenbanksysteme A und B bestimmt.

Gleiches erfolgt für eine Korrelation der Datensätze 202 und 203 der Datenbanksysteme B und C, wobei die Differenzen zwischen den Datenfeldern 209 und 213, 210 und 214, 211 und 215 sowie 212 und 216 gebildet werden, und diesen Differenzen aus der zweiten oben angegebenen Tabelle entsprechende Eindeutigkeitsparameter zugeordnet werden. Um wieder einen gesamten Eindeutigkeitsparameter für die Korrelation zwischen den Datensätzen 202 und 203 zu erhalten, wird der arithmetische Mittelwert Q_{BC} zwischen diesen Eindeutigkeitsparametern gebildet.

Der die Korrelation aller drei Datenbanksysteme A, B und C beschreibende Eindeutigkeitsparameter Q wird als Produkt der Eindeutigkeitsparameter Q_{AB}, Q_{BC} der beiden getrennten Korrelationen A, B und B, C bestimmt. Wie zuvor werden nur solche Informationen als verläßliche Informationen gewertet, deren Eindeutigkeitsparameter Q oberhalb eines vorgegebenen Schwellenwerts, im gegebenen Beispiel oberhalb 0,8, liegt.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung der Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

## Patentansprüche

1. Verfahren zur Korrelation von Datensätzen (2, 102, 201, 202, 203) aus einer Mehrzahl von voneinander verschiedenen Datenbanksystemen (1, 101, A, B, C), mit den Schritten
Bilden der Differenz (Pi) zwischen einem Datenfeld (3, 4, 5, 6, 204, 205, 206) eines Datensatzes (2, 201) eines ersten Datenbanksystems (1, A) und einem Datenfeld (103, 104, 105, 106, 207, 208, 209) eines Datensatzes (102, 202) eines zweiten Datenbanksystems (101, B),
Zuordnen eines Eindeutigkeitsparameters (Qi) zu der Differenz (Pi),
Vergleichen des Eindeutigkeitsparameters (Qi) oder eines daraus abgeleiteten Werts (Q) mit einem vorgegebenen Schwellenwert (QS),
Zuordnen des Datensatzes (2, 201) des ersten Datenbanksystems (1, A) zu dem Datensatz (102, 202) des zweiten Datenbanksystems (101, B), wenn der Eindeutigkeitsparameter (Qi) oder der daraus abgeleitete Wert (Q) über dem Schwellenwert (QS) liegt.

2. Verfahren nach Anspruch 1, **dadurch gekennzeichnet, dass** es die folgenden Schritte aufweist:
Bilden der Differenz (Pi) mindestens zwischen einem ersten Datenfeld (3) eines Datensatzes (2) des ersten Datenbanksystems (1) und einem ersten Datenfeld (103) eines Datensatzes (102) des zweiten Datenbanksystems (101) und zwischen einem zweiten Datenfeld (4) eines Datensatzes (2) des ersten Datenbanksystems (1) und einem zweiten Datenfeld (104) eines Datensatzes (102) des zweiten Datenbanksystems (101)
Zuordnen jeweils eines Eindeutigkeitsparameters (Q1, Q2) zu jeder der Differenzen (P1, P2).

3. Verfahren nach Anspruch 2, **dadurch gekennzeichnet, dass** es die folgenden Schritte aufweist:
Bilden des Mittelwerts (Q) der Eindeutigkeitsparameter (Q1, Q2) und
Vergleichen des Mittelwerts (Q) mit dem Schwellenwert (QS).

4. Verfahren nach Anspruch 2, **dadurch gekennzeichnet, dass** vor dem Bilden des Mittelwerts (Q) die Eindeutigkeitsparameter (Q1, Q2) gewichtet werden.

5. Verfahren nach einem der Ansprüche 1 bis 4 zur Korrelation von Datensätzen (201, 202, 203) von mindestens drei Datenbanksystemen (A, B, C) mit den Schritten
Bilden der Differenz (Pi) zwischen einem ersten Datenfeld (204) eines Datensatzes (201) eines ersten Datenbanksystems (A) und einem ersten Datenfeld (208) eines Datensatzes (202) eines zweiten Datenbanksystems (B) sowie zwischen einem zweiten Datenfeld (210) des Datensatzes (202) des zweiten Datenbanksystems (B) und einem ersten Datenfeld (214) eines Datensatzes (203) eines dritten Datenbanksystems (C),
Zuordnen je eines Eindeutigkeitsparameters (Qi) zu jeder der Differenzen (Pi),
Vergleichen eines aus den Eindeutigkeitsparametern (Qi) abgeleiteten Werts mit einem vorgegebenen Schwellenwert (QS),
Zuordnen des Datensatzes (201) des ersten Datenbanksystems (A) zu dem Datensatz (202) des zweiten Datenbanksystems (B) und zu dem Datensatz (203) des dritten Datenbanksystems (C), wenn der aus den Eindeutigkeitsparametern (Qi) abgeleitete Wert über dem Schwellenwert (QS) liegt.

6. Verfahren nach Anspruch 5, **dadurch**, dass der abgeleitete Wert als Produkt der Eindeutigkeitsparameter bestimmt wird.

7. Verwendung eines Verfahrens nach einem der Ansprüche 1 bis 6 zur Korrelation von Datensätzen, welche Flugzeugteile und deren technischen Zustände während des Flugbetriebs, bei der Wartung und in der Werkstatt beschreiben.

8. Computerprogramm mit Programmcode zur Durchführung eines Verfahrens nach einem der Ansprüche 1 bis 6.

9. Maschinenlesbarer Datenträger mit einem darauf gespeicherten Computerprogramm nach Anspruch 8.

10. Computersystem, auf dem ein Computerprogramm nach Anspruch 8 geladen ist.
